# EUROPÄISCHE PATENTSCHRIFT

(11) **EP 3 063 444 B1**
(45) Veröffentlichungstag und Bekanntmachung des Hinweises auf die Patenterteilung: **09.01.2019**
(21) Anmeldenummer: 14781838.9
(22) Anmeldetag: 29.09.2014
(51) Int. Cl.: F16K 31/52, B65G 47/71, F16K 31/04, B29C 37/00, B29L 31/00, B29C 49/08, B29C 49/28, B29C 49/42, B29C 49/58, B65B 39/00

(54) **BEHÄLTERBEHANDLUNGSANLAGE UND VERFAHREN ZUM VERSTELLEN EINES VENTILS ODER EINER AUSLEITEINRICHTUNG EINER BEHÄLTERBEHANDLUNGSANLAGE**
CONTAINER-HANDLING INSTALLATION AND METHOD FOR ADJUSTING A VALVE OR A DISCHARGING DEVICE OF A CONTAINER-HANDLING INSTALLATION
INSTALLATION DE TRAITEMENT DE RÉCIPIENTS ET PROCÉDÉ DE RÉGLAGE D'UN CLAPET OU D'UN MOYEN DE DÉRIVATION D'UNE INSTALLATION DE TRAITEMENT DE RÉCIPIENTS

(30) Priorität: 30.10.2013 DE 102013111933
(43) Veröffentlichungstag der Anmeldung: 07.09.2016
(73) Patentinhaber: Krones AG, 93073 Neutraubling (DE)
(72) Erfinder: HAHN, Wolfgang, 93073 Neutraubling (DE); HANDSCHUH, Eduard, 93073 Neutraubling (DE); VOTH, Klaus, 93073 Neutraubling (DE); FINGER, Dieter, 93073 Neutraubling (DE); GELTINGER, Florian, 93073 Neutraubling (DE); DAVIDSON, Hartmut, 93073 Neutraubling (DE); SEGER, Martin, 93073 Neutraubling (DE)
(74) Vertreter: Schuhbießer, Irmgard Gertrud
(86) Internationale Anmeldenummer: PCT/EP2014/070799
(87) Internationale Veröffentlichungsnummer: WO 2015/062800

(56) Entgegenhaltungen:
- WO-A1-82/01697
- WO-A1-03/029679
- DE-A1-102007 037 995
- DE-A1-102012 201 059
- FR-A1- 2 745 522

## Beschreibung

Die vorliegende Erfindung bezieht sich auf eine Behälterbehandlungsanlage und ein Verfahren zum Verstellen eines Elements eines Ventils oder einer Ausleiteinrichtung einer Behälterbehandlungsanlage.

Bei einer Behälterbehandlungsanlage werden eine Vielzahl von Behältern zwischen verschiedenen Behälterbehandlungsstationen, wie einer Streckblasmaschine, einer Etikettiereinrichtung, einer Inspektionseinrichtung, einer Abfülleinrichtung, einer Reinigungseinrichtung usw. mit einer oder mehreren verschiedenen Transporteinrichtung(en) transportiert. In den verschiedenen Behälterbehandlungsstationen werden die Behälter unter Verwendung von Ventilen, wie Blasventil, Füllventil, usw., und/oder Ausleiteinrichtungen, wie Pusher, Igel, usw. behandelt.

Die WO 8201697 A1 zeigt einen Transportstern zur Teilung eines einteiligen Behälterstroms. Hierbei können am Transportstern vorgesehene Saugnäpfe (Element zum Behandeln eines Behälters) jeweils mit Hilfe eines Ventils geöffnet oder geschlossen werden, um einen Behälter zu halten oder freizugeben.

Ventile und Ausleiteinrichtungen umfassen jeweils ein Element, das zwischen einer ersten und zweiten Stellung zu verstellen ist. Bei einem Ventil ist das Element zwischen einer geöffneten und geschlossenen Stellung, den beiden Endlagen, des Ventils zu bewegen. Hierbei sollen je nach Bedarf auch Zwischenstellungen zwischen den beiden Endlagen möglich sein. Bei einer Ausleiteinrichtung ist das Element zwischen einer ersten Stellung zu bewegen, in welcher keine Ausleitung des Behälters stattfindet, und einer zweiten Stellung zu bewegen, welche die Ausleitung des Behälters bewirkt. Gegebenenfalls sollen auch hier Zwischenstellungen zwischen den beiden Stellungen möglich sein. Mit derzeitigen Ventilen und Ausleiteinrichtungen sind in der Regel nur zwei Stellungen, wie Auf/Zu, aber keine Zwischenstellungen dazwischen möglich. Zwischenstellungen lassen sich derzeit nur durch einen zusätzlichen mechanisch einstellbaren Anschlag realisieren, was aufwändig und damit teuer ist.

Problematisch ist außerdem, dass die Verstellung der Elemente der Ventile und Ausleiteinrichtungen angepasst an eine Produktionsgeschwindigkeit der Behälterbehandlungsanlage von beispielsweise bis zu 40.000 Behälter pro Stunde oder eine Geschwindigkeit der Behälter von ca. 2 m pro Sekunde erfolgen muss. Somit muss die Verstellung der Ventile und Ausleiteinrichtungen sehr schnell und zudem auch sehr präzise erfolgen, um keinen Anlagenstillstand zu verursachen. Anlagenstillstände bedingen Produktionsausfälle und erfordern den Einsatz von Bedienpersonal, so dass die Produktionskosten steigen.

Bisher werden bei einer solchen Behälterbehandlungsanlage für die Verstellung der Ventile und Ausleiteinrichtungen verschiedene Mechaniken verwendet, die gegebenenfalls mit Druckluft betätigt werden. Die Mechaniken sind je nach Konstruktion verschleißanfällig und damit wartungsintensiv. Bei den Ventilen und Ausleiteinrichtungen kommt es zu einer großen Streuung der Schaltzeiten von derzeit ± 2 ms. Aufgrund dessen ist mehr Steuerluft erforderlich, so dass der Druckluftverbrauch steigt. Jedoch ist Druckluft vergleichsweise teuer. Darüber hinaus sind die Reaktionszeiten der Ventile und Ausleiteinrichtungen durch eine Schaltflanke bis zum Druckanstieg länger als gewünscht.

Daher ist es Aufgabe der vorliegenden Erfindung, eine Behälterbehandlungsanlage und ein Verfahren zum Verstellen eines Elements eines Ventils oder einer Ausleiteinrichtung einer Behälterbehandlungsanlage bereitzustellen, mit welchen die zuvor genannten Probleme gelöst werden können. Insbesondere soll eine Behälterbehandlungsanlage und ein Verfahren zum Verstellen eines Elements eines Ventils oder einer Ausleiteinrichtung einer Behälterbehandlungsanlage bereitgestellt werden, bei welchen die Verstellung des Elements und somit des Ventils oder der Ausleiteinrichtung einfach, präzise, schnell, variabel, zuverlässig, wartungsarm und kostengünstig realisiert werden kann.

Diese Aufgabe wird durch eine Behälterbehandlungsanlage nach Patentanspruch 1 gelöst. Die Behälterbehandlungsanlage umfasst mindestens ein Element zum Behandeln von Behältern, wobei das Element Teil eines Ventils oder einer Ausleiteinrichtung ist, und eine Verstelleinrichtung zum Verstellen des Elements zwischen einer ersten und einer zweiten Stellung, wobei die Verstelleinrichtung einen mit Magnetismus arbeitenden Aktuator derart aufweist, dass eine durch den Aktuator hervorgerufene Drehbewegung das Element unter Vermittlung einer Mechanik zwischen seiner ersten und seiner zweiten Stellung verstellt, wie in Anspruch 1 beschrieben.

Bei der Behälterbehandlungsanlage kann die Verstellung des Elements und damit des Ventils oder der Ausleiteinrichtung sehr präzise und schnell jedoch trotzdem sehr einfach und kostengünstig durchgeführt Somit kann die Verstellung des Elements auch bei einer Produktionsgeschwindigkeit der Behälterbehandlungsanlage von beispielsweise bis zu 40.000 Behälter pro Stunde oder einer Geschwindigkeit der Behälter von ca. 2 m pro Sekunde präzise erfolgen.

Zudem können mit der Verstelleinrichtung je nach Bedarf Zwischenstellungen zwischen den beiden Endstellungen des Ventils oder der Ausleiteinrichtung angefahren werden. Dadurch ist das Ventil oder die Ausleiteinrichtung sehr variabel einsetzbar. Zudem umfasst die Verstelleinrichtung damit eine Drosselfunktion, so dass eine zusätzliche Drossel entfallen kann. Daraus ergibt sich eine kompaktere Bauweise des Ventils oder der Ausleiteinrichtung.

Der Aktuator ist sehr robust und die Mechanik sehr einfach aufgebaut. Damit ist die Verstelleinrichtung sehr verschleißunanfällig und dadurch wartungsam. Somit hat die Verstelleinrichtung zur Verstellung des Elements und damit des Ventils oder der Ausleiteinrichtung eine hohe Lebensdauer. Darüber hinaus ist die Verstelleinrichtung zur Verstellung des Elements eines Ventils oder einer Ausleiteinrichtung ohne Zusatzaufwand diagnosefähig bzw. überwachbar.

Darüber hinaus kann mit der Verstelleinrichtung zur Verstellung des Elements und damit des Ventils oder der Ausleiteinrichtung die Schaltzeitenstreuung bis auf ± 0 ms reduziert werden. Dadurch hat das Ventil oder die Ausleiteinrichtung ein gleichbleibendes Schaltverhalten. Insgesamt ergibt sich mit der Verstelleinrichtung zur Verstellung des Elements und damit des Ventils oder der Ausleiteinrichtung eine bessere Behälterqualität und es ist keine teure und energieintensive Druckluft mehr erforderlich.

Ein weiterer Vorteil der Verstelleinrichtung zur Verstellung des Elements und damit des Ventils oder der Ausleiteinrichtung besteht darin, dass die Verstellungeinrichtung leicht nachrüstbar ist oder bestehende Anlagen damit leicht umrüstbar sind.

Vorteilhafte weitere Ausgestaltungen der Behälterbehandlungsanlage sind in den abhängigen Patentansprüchen angegeben.

Es ist möglich, dass die Mechanik derart ausgestaltet ist, dass eine durch den Aktuator hervorgerufene Drehbewegung in eine lineare Bewegung zwischen der ersten und zweiten Stellung transformiert wird.

Bei der Behälterbehandlungsanlage hat das Ventil möglicherweise eine auslenkbare Stange, welche derart mit einem Rotor des Aktuators und einer Führungsstange gekoppelt ist, dass eine durch den Aktuator hervorgerufene Drehbewegung in eine lineare Bewegung der Führungsstange transformiert wird, oder das Ventil hat einen Rohrkolben mit einer Außenverzahnung, welche derart mit einer Innenverzahnung des Aktuators gekoppelt ist, dass eine durch den Aktuator hervorgerufene Drehbewegung in eine lineare Bewegung des Rohrkolbens transformiert wird.

Bei der zuvor genannten zweiten Variante des Ventils kann die Außenverzahnung als Gewindestange ausgeführt sein, und/oder die Außenverzahnung und die Innenverzahnung können ein Getriebe bilden, das selbsthemmend ausgeführt ist und/oder dessen Spiel einstellbar ist. Zudem kann der Rohrkolben ein druckausgeglichener Rohrkolben sein, und/oder der Rohrkolben kann eine Verdrehsicherung gegen Drehung um die eigene Achse aufweisen.

Bei der Behälterbehandlungsanlage ist möglicherweise eine elektrische Steuereinrichtung zum Steuern des Aktuators in das Ventil integriert. Dadurch lässt sich eine besonders kompakte Baugruppe erzielen.

Das Ventil kann ein gegen Druck von bis zu ca. 40 bar abgedichtetes Gehäuse mit Gehäusedeckel aufweist, in welchem die Verstelleinrichtung montiert ist. Ein solches Ventil ist als Blasventil einer Streckblasmaschine geeignet.

Das zuvor beschriebene Ventil kann ein Füllventil einer Abfülleinrichtung zum Abfüllen mindestens eines Mediums in einen Behälter sein oder das Ventil kann ein Blasventil einer Streckblasmaschine sein.

Der Aktuator der Behälterbehandlungsanlage kann ein 4-poliger Gleichstromaktuator sein, der mit Magnetismus zwischen zwei Stellungen betreibbar ist. Insbesondere kann der Aktuator an beliebige Stellen zwischen den beiden Stellungen gefahren und dort gehalten werden.

Die Behälterbehandlungsanlage kann auch derart ausgestaltet sein, dass mehrere Ausleiteinrichtungen in einer Reihe nebeneinander angeordnet sind, und eine von dem Aktuator antreibbare Nockenscheibe derart relativ zu der Reihe aus Ausleiteinrichtungen angeordnet ist, dass eine Drehung der Nockenscheibe um ihre eigene Achse aufgrund einer Drehung des Aktuator bewirkt, dass nacheinander je ein Nocken der Nockenscheibe eine der Ausleiteinrichtungen berührt und dadurch in eine lineare Bewegung versetzt, um die Ausleiteinrichtung von der ersten Stellung in die zweite Stellung zu bewegen. Alternativ zur Nockenscheibe können auch mehrere Aktuatoren nacheinander angeordnet sein, um die zuvor beschriebene Funktion zu erfüllen. Hierbei kann beispielsweise je ein Aktuator eine der Ausleiteinrichtungen in eine lineare Bewegung versetzen.

Die zuvor beschriebene Behälterbehandlungsanlage kann zudem eine Steuereinrichtung aufweisen zur Steuerung des Aktuators derart, dass sein Rotor ausgehend von einem Arbeitspunkt beschleunigt und der Aktuator bei Annäherung zu einem anderen Arbeitspunkt stromlos geschaltet wird, so dass der Rotor bedingt durch seine Massenträgheit oder die Massenträgheit einer angebauten Last den anderen Arbeitspunkt überstreicht und dann wieder mit einer Spannungsumkehr in der gleichen Richtung wie vorher betrieben werden kann, um einen diskreten Rundlauf des Aktuators um seine Achse zu bewirken. Dadurch ist die Verstelleinrichtung auf eine weitere vorteilhafte Weise verwendbar.

Bei der zuvor beschriebenen Behälterbehandlungsanlage ist das Element beispielsweise Teil eines Transportsterns zum Transportieren von Behältern und/oder ein Pusher und/oder Teil eines Treibstockaggregats und/oder Teil eines Etikettenwagens und/oder Teil einer Ausleitweiche. Somit kann das Element und damit das Ventil oder die Ausleiteinrichtung in vielen Bereichen der Behälterbehandlungsanlage zum Einsatz kommen. Dadurch werden die Anschaffungs- und Betriebskosten der Behälterbehandlungsanlage gesenkt und die Zuverlässigkeit der Anlage erhöht.

Die Aufgabe wird zudem durch ein Verfahren zum Verstellen eines Elements eines Ventils oder einer Ausleiteinrichtung einer Behälterbehandlungsanlage nach Patentanspruch 13 gelöst. Die Behälterbehandlungsanlage umfasst mindestens ein Element zum Behandeln von Behältern, wobei das Element Teil des Ventils oder der Ausleiteinrichtung ist. Das Verfahren hat den Schritt eines Verstellens, mit einer Verstelleinrichtung, des Elements zwischen einer ersten und einer zweiten Stellung, wobei die Verstelleinrichtung einen mit Magnetismus arbeitenden Aktuator derart aufweist, dass eine durch den Aktuator hervorgerufene Drehbewegung das Element unter Vermittlung einer Mechanik zwischen seiner ersten und seiner zweiten Stellung verstellt, wie in Anspruch 13 beschrieben.

Das Verfahren erzielt die gleichen Vorteile wie sie zuvor in Bezug auf die Behälterbehandlungsanlage genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 ein stark vereinfachtes Blockschaltbild einer Behälterbehandlungsanlage gemäß einem ersten Ausführungsbeispiel;
Fig. 2 eine vereinfachte Ansicht einer ersten Stellung eines Ventils für die Behälterbehandlungsanlage gemäß dem ersten Ausführungsbeispiel;
Fig. 3 eine vereinfachte Ansicht einer zweiten Stellung des Ventils für die Behälterbehandlungsanlage gemäß dem ersten Ausführungsbeispiel;
Fig. 4 eine Schnittansicht einer ersten Stellung eines Ventils für die Behälterbehandlungsanlage gemäß einem zweiten Ausführungsbeispiel;
Fig. 5 eine Schnittansicht einer zweiten Stellung des Ventils für die Behälterbehandlungsanlage gemäß dem zweiten Ausführungsbeispiel;
Fig. 6 eine schematische Ansicht einer Ausleiteinrichtung für die Behälterbehandlungsanlage gemäß einem dritten Ausführungsbeispiel; und
Fig. 7 eine weitere schematische Ansicht der Ausleiteinrichtung für die Behälterbehandlungsanlage gemäß dem dritten Ausführungsbeispiel.

In den Figuren sind gleiche oder funktionsgleiche Elemente, sofern nichts anderes angegeben ist, mit denselben Bezugszeichen versehen.

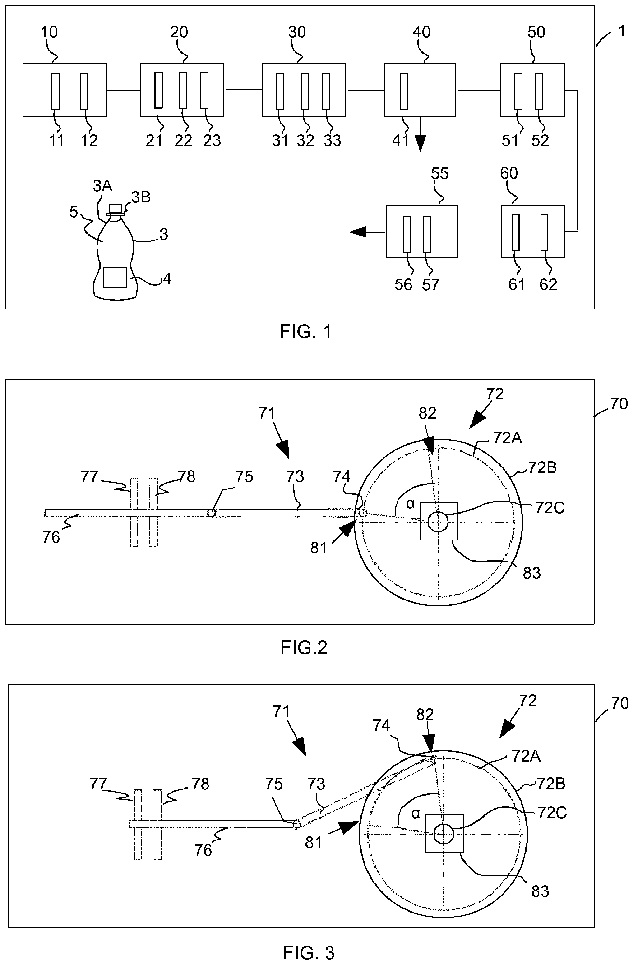

Fig. 1 zeigt ein Beispiel für eine Behälterbehandlungsanlage 1, in welcher Behälter 3 mit einem Hals 3A und optional einem Neckring 3B behandelt werden können. Die Behälterbehandlungsanlage 1 in Fig. 1 hat eine Streckblasmaschine 10, einen Transportstern 20, eine Inspektionseinrichtung 30, eine Ausleitweiche 40, sowie eine erste und zweite Abfülleinrichtung 50, 55, denen eine Etikettiereinrichtung 60 nachgeschaltet ist. Die Streckblasmaschine 10 kann durch Einblasen von Druckluft mit Blasventilen 11, 12 in Preformen Behälter 3 formen. Der Transportstern 20 greift die Behälter 3 mit seinen Klammern 21, 22, 23 und transportiert diese zu der Inspektionseinrichtung 30, in welcher die Behälter 3 auf Fehler inspiziert werden. Fehlerhafte Behälter 3 werden mit Pushern 31, 32, 33 aus dem Behälterstrom ausgeleitet. Die anderen Behälter 3, also die fehlerfreien Behälter 3, werden in der Ausleitweiche 40 mit einem Ausleitelement 41 entweder der ersten Abfülleinrichtung 50 oder der zweiten Abfülleinrichtung 55 zugeführt. In der ersten und zweiten Abfülleinrichtung 50, 55 wird/werden mit Hilfe von Füllventilen 51, 52, 56, 57 ein Medium 5 oder mehrere Medien 5 in die Behälter 3 gefüllt. Nach der zweiten Abfülleinrichtung 55 können die Behälter 3 beispielsweise zum Verpacken, Pallettieren weitergeleitet werden, wie durch einen Pfeil an der zweiten Abfülleinrichtung 55 angedeutet. Die Etikettiereinrichtung 60 kann die Behälter 3 mit Etiketten 4 versehen und hat hierfür einen ersten und zweiten Etikettenwagen 61, 62. Die Behälter 3 können Glasflaschen, Kunststoffflaschen, Dosen, usw. sein, in welche ein flüssiges und/oder gasförmiges und/oder festes Medium 5 gefüllt werden kann. Das feste Medium 5 kann beispielsweise in Form von Kügelchen vorhanden sein.

Bei der zuvor beschriebenen Behälterbehandlungsanlage 1 ist die Anordnung der Streckblasmaschine 10, des Transportsterns 20, der Inspektionseinrichtung 30, der Ausleitweiche 40, der ersten und zweiten Abfülleinrichtung 50, 55 und der Etikettiereinrichtung 60 auch in einer anderen Reihenfolge wählbar als in Fig. 1 dargestellt und zuvor beschrieben. Zudem muss die Behälterbehandlungsanlage 1 auch nicht alle zuvor genannten Teile umfassen.

Fig. 2 zeigt einen Ventiltrieb als Schnellschaltventil oder Ventil 70, das als eines der Füllventile 51, 52, 61, 62 zum Einsatz kommen kann. Das Ventil 70 hat eine Verstelleinrichtung 71 mit einem Aktuator 72 und einer auslenkbaren Stange 73, die an ihrem einen Ende mit einem Kopplungselement 74 an den Aktuator 72, genauer gesagt seinen Rotor 72A, gekoppelt ist. Der Aktuator 72 hat zudem einen Stator 72B, in welchem sich der Rotor 72A um eine Achse 72C drehen kann. Die auslenkbare Stange 73 ist an ihrem anderen Ende über ein Gelenk 75 mit einer Führungsstange 76 verbunden. Die Führungsstange 76 wird zwischen einer ersten Führung 77 und einer zweiten Führung 78 linear geführt. In Fig. 2 sind die erste und zweite Führung 77, 78 jeweils quer zur Führungsstange 76 angeordnet. Wird der Aktuator 72 mit elektrischem Strom bestromt, dreht sich sein Rotor 72A zwischen einer ersten Stellung 81 und einer zweiten Stellung 82, die durch einen Drehwinkel α voneinander beabstandet sind. In Fig. 2 ist der Rotor 72A derart gedreht, dass sich die Führungsstange 76 und die auslenkbare Stange 73 auf einer geraden Linie befinden. Demzufolge befindet sich die auslenkbare Stange 73 in der ersten Stellung 81, in welcher die auslenkbare Stange 73 durch eine Feststellbremse 83 gehalten werden kann. In der ersten Stellung 81 ist das Ventil 70 geschlossen.

Demgegenüber ist der Rotor 72A in Fig. 3 derart gedreht, dass sich die Führungsstange 76 und die auslenkbare Stange 73 nicht mehr auf einer geraden Linie befinden, sondern zwischen ihnen ein Winkel kleiner 180° in Richtung auf die zweite Stellung 82 gebildet ist. In Fig. 3 befindet sich das Kopplungselement 74 und damit das entsprechende Ende der auslenkbaren Stange 73 in der zweiten Stellung 82, in welcher die auslenkbare Stange 73 und damit auch die Führungsstange 76 ebenfalls durch die Feststellbremse 83 gehalten werden kann. In der zweiten Stellung 82 ist das Ventil 70 geöffnet.

Somit führt die Mechanik aus auslenkbarer Stange 73, Kopplungselement 74, Gelenk 75, Führungsstange 76 und Führungen 77, 78 eine Transformation der Drehbewegung des Aktuators 72, genauer gesagt seines Rotors 72A in eine translatorische Bewegung oder Hubbewegung der Führungsstange 76 aus. Die Verstelleinrichtung 71 ist also ein elektro-mechanischer Antrieb für die Führungsstange 76.

Der Aktuator 72 ist bei dem Ausführungsbeispiel ein 4-poliger Gleichstromaktuator der auch als Magnetaktuator oder Torqueaktuator bezeichnet wird. Bei dem Aktuator 72 wirkt ein durch elektrischen Strom in seinem Stator 72B erzeugtes Magnetfeld zusammen mit einem Magnetfeld seines Rotors 72A. Der Rotor 72A kann als Permanentmagnet ausgeführt sein. Der Aktuator 72 arbeitet also mit Magnetismus. Dadurch wird bei dem Aktuator 72 ein Drehmoment (Torque) erzeugt, solange die Magnetübergänge seines Rotors 72A und Stators 72B nicht vollständig übereinstimmen. Somit wird keine Rotation des Rotors 72A erzeugt, wenn die Magnetübergänge des Rotors 72A und des Stators 72B übereinstimmen. Je nach Position von Rotor 72A und Stator 72B zueinander kann bei dem Aktuator 72 eine Drehung im Uhrzeigersinn oder gegen den Uhrzeigersinn erzeugt werden.

Hierbei ist der Drehmomentpegel proportional zu der Intensität des elektrischen Stroms, der in den Spulen des Stators 72B des Aktuators 72 fließt. Das Restdrehmoment, das sich aufgrund von beispielsweise Reibung und/oder Rastung und/oder magnetostatischer Kraft ergeben kann, ist bei dem Aktuator 72 sehr gering.

Beispielsweise ist bei dem Aktuator 72 das Drehmoment gleich Null, wenn sich ein Statorpol und ein Magnetpol des Rotors 72A direkt gegenüberstehen. Diese Stellung wird mit Totpunkt bezeichnet. Mit zunehmendem Polwinkel steigt das Drehmoment bis zu einem Maximum, welches bei etwa 8° annähernd erreicht wird, was der ersten Stellung 81 in Fig. 2 und Fig. 3 entspricht. Bis zu einem Winkel von etwa 82°, welcher der zweiten Stellung 82 in Fig. 2 und Fig. 3 entspricht, bleibt das Drehmoment auf diesem hohen Niveau, bevor es bei einer weiteren Annäherung von Statorpol und Rotormagnet und Erreichen der 90°-Lage wieder Richtung Null geht. Betreibt man den Aktuator 72 zwischen den beiden Extremwerten und folglich auch Endlagen, also der ersten und zweiten Stellung 81, 82, kann durch einfache Spannungsumkehr die Drehrichtung des Rotors 72A bestimmt werden.

Demzufolge ist der Aktuator 72 zwischen den zwei Endlagen, den zwei Stellungen 81, 82 in Fig. 2 und Fig. 3, betreibbar. Der verwendbare Bereich liegt hierbei in einem Winkelsegment von bis zu 75°. Der Aktuator 72 kann die Mechanik aus auslenkbarer Stange 73, Kopplungselement 74, Gelenk 75 und Führungsstange 76 geführt durch die Führungen 77, 78 zwischen den in Fig. 2 und Fig. 3 gezeigten beiden Stellungen 81, 82 je nach Bedarf hin und her bewegen. Hierbei sind auch Zwischenstellungen zwischen den beiden Stellungen 81, 82 anfahrbar und mit der Feststellbremse 83 haltbar. Für das Anfahren der Zwischenstellungen kann beispielsweise ein Absolutwertgeber eingesetzt werden. Bei einem Füllventil 51, 52, 56, 57, das als Ventil 70 ausgeführt ist, kann somit ein Schnellfüllen und ein Langsamfüllen sowie jeder beliebige Durchfluss abhängig vom Medium 5 realisiert werden. Die Feststellbremse 83 hält den Aktuator 72 und damit die damit verbundene Mechanik im Ruhezustand in Position, also wenn keine Verstellung des Ventils 70 mit Hilfe des Aktuators 72 erfolgt. Die Feststellbremse 83 ist bei dem Ausführungsbeispiel eine Federkraftbremse, insbesondere eine magnetisch lösbare Federkraftbremse.

Das Ventil 70 gemäß dem vorliegenden Ausführungsbeispiel kann bei der Behälterbehandlungsanlage 1 beispielsweise als Pusher 31, 32, 33 zum Einsatz kommen und/oder im Transportstern 20 und/oder im Treibstockaggregat und/oder im Igel und/oder im Etikettenwagen 11, 12 und/oder in Ausleitweichen 40 eingebaut sein. Möglich ist auch der Einsatz bei einer Einzelpacktulpensteuerung, als Greifer, usw.

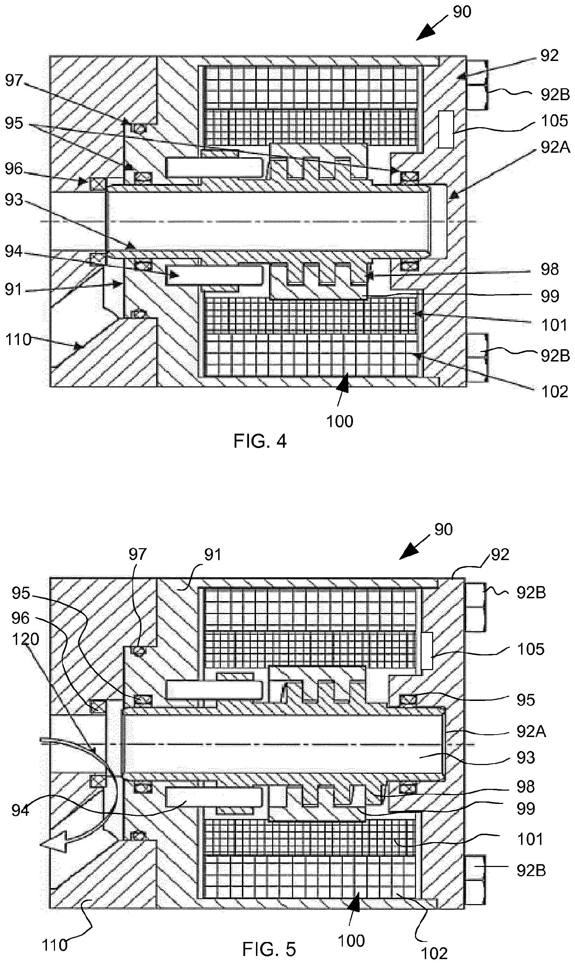

Fig. 4 und Fig. 5 zeigen ein Ventil 90 gemäß einem zweiten Ausführungsbeispiel. Auch das Ventil 90 ist, wie das Ventil 90 gemäß dem ersten Ausführungsbeispiel, ein Schnellschaltventil und kann als eines der Füllventile 51, 52, 61, 62 zum Einsatz kommen. Das Ventil 90 kann jedoch auch ein Blasventil 11, 12 einer Streckblasmaschine 10 der Behälterbehandlungsanlage 1 sein. Das Ventil 90 hat ein Gehäuse 91 mit einem Deckel 92. Der Deckel 92 weist eine Aussparung als Anschlag 92A auf und ist mit Befestigungselementen 92B an dem Gehäuse 91 lösbar befestigt. Das Gehäuse 91 führt einen Rohrkolben 93 entlang einer linearen Führung 94. Der Rohrkolben 93 ist mit Dichtungen 95 gegenüber dem Gehäuse 91 abgedichtet. Für den Fall, dass das Ventil 90 ein Blasventil 11, 12 ist, können die Dichtungen 95 beispielsweise bis ca. 40 bar abdichten, wobei 1 bar = 10⁵ Pa gilt. Zudem ist eine Dichtung 96 zwischen dem Rohrkolben 93 und einem Steuerblock 110 vorgesehen. Zwischen dem Gehäuse 91 und dem Steuerblock 110 ist ein O-Ring 97 angeordnet. An dem Rohrkolben 93 befindet sich eine Außenverzahnung 98, welche in eine Innenverzahnung 99 eines Aktuators 100, genauer seines Rotors 101, eingreift. Der Rotor 101 in Fig. 4 und Fig. 5 hat mindestens eine Rotorwicklung und kann sich in einem Stator 102 des Aktuators 100 um den Rohrkolben 93 als Achse drehen. Auch der Stator 102 in Fig. 4 und Fig. 5 hat mindestens eine Statorwicklung. Der Aktuator 100 wird von einer Steuereinrichtung 105 gesteuert, die in das Ventil 90 integriert ist.

In Fig. 4 ist die geschlossene Stellung des Ventils 90 gezeigt, bei welcher der Rohrkolben 93 beabstandet zu dem Anschlag 92A im Deckel 92 und an dem Steuerblock 110 angeordnet ist.

Demgegenüber ist in Fig. 5 die geöffnete Stellung des Ventils 90 gezeigt, bei welcher der Rohrkolben 93 an den Anschlag 92A im Deckel 92 anschlägt oder an dem Anschlag 92A anliegt. In der geöffneten Stellung in Fig. 5 kann beispielsweise ein Medium 5, das in den Behälter 3 von Fig. 1 gefüllt werden kann, in Richtung des Strömungspfeils 120 am Rohrkolben 93 und dem Gehäuse 91 vorbei durch den Steuerblock 110 strömen.

Der Aktuator 100 von Fig. 4 und Fig. 5 ist in seinen wesentlichen Funktionen gleich dem Aktuator 72 des ersten Ausführungsbeispiels, so dass hier auf die Beschreibung des ersten Ausführungsbeispiels verwiesen wird. Der Aktuator 100 wird von der Steuereinrichtung 105 entsprechend gesteuert, wie aus der Beschreibung des ersten Ausführungsbeispiels hervorgeht. Somit kann auch das Ventil 90 gemäß dem zweiten Ausführungsbeispiel durch eine Drehung des Rotors 101 verstellt werden. Bei dem Ventil 90 wird die Drehung des Rotors 101 durch die Außenverzahnung 98 des Rohrkolbens 93 und die Innenverzahnung 99 in eine lineare Bewegung des Rohrkolbens 93 als zu verstellendes Element des Ventils 90 transformiert. Der Rohrkolben 93 bewegt sich hierbei in der Längsachse des Aktuators 100. Die Außenverzahnung 98 des Rohrkolbens 93 und die Innenverzahnung 99 des Rotors 101 können auch als Kopplungseinrichtung bezeichnet werden. Die Außenverzahnung 98 des Rohrkolbens 93 ist in Fig. 4 und Fig. 5 als Gewindestange oder Gewinderohr ausgeführt. Die Innenverzahnung 99 ist entsprechend komplementär dazu ausgeführt. Der Rohrkolben 93 kann auch als Gewindestange ausgeführt sein. Zudem kann der Rohrkolben 93 als druckausgeglichener Rohrkolben ausgeführt sein.

Demzufolge ist auch der Aktuator 100 zwischen zwei Endlagen, den zwei Stellungen von Fig. 4 und Fig. 5, betreibbar. Die beiden Endlagen sind um einen Drehwinkel α voneinander beabstandet, auch wenn dieser in Fig. 4 und Fig. 5 nicht dargestellt ist. Die Größe des Drehwinkels α hängt von der Ausführung der Außenverzahnung 98 des Rohrkolbens 93 und der Innenverzahnung 99 des Rotors 101 ab. Somit kann der Aktuator 100 die Mechanik aus der Außenverzahnung 98 des Rohrkolbens 93 und der Innenverzahnung 99 geführt durch die lineare Führung 94 zwischen den in Fig. 4 und Fig. 5 gezeigten beiden Stellungen je nach Bedarf hin und her bewegen. Hierbei sind auch Zwischenstellungen zwischen den beiden Stellungen anfahrbar und haltbar. Das Schließen des Ventils 90 erfolgt hierbei kraftgesteuert. Bei dem Ventil 90 ist also ein elektro-mechanischer Antrieb für den Rohrkolben 93 realisiert.

Auch bei diesem Ausführungsbeispiel kann die Feststellbremse 83 (vgl. Fig. 2 und Fig. 3) den Aktuator 100 im Ruhezustand in Position halten, also wenn keine Verstellung des Ventils 90 mit Hilfe des Aktuators 100 erfolgt. Damit kann der Rohrkolben 93 gegen eine Verdrehung um die eigene Achse gesichert werden. Die Feststellbremse 83 kann daher auch als Verdrehsicherung bezeichnet werden. Auch bei diesem Ausführungsbeispiel ist die Feststellbremse 83 eine Federkraftbremse, insbesondere eine magnetisch lösbare Federkraftbremse. Zudem kann die Außenverzahnung 98 des Rohrkolbens 93 und die Innenverzahnung 99 des Rotors 101 als Getriebe selbsthemmend ausgeführt sein. Hierbei kann das Spiel im Getriebe einstellbar sein. Insbesondere wird das Getriebe spielfrei eingestellt. Die selbsthemmende Ausführung des Getriebes ermöglicht ein sicheres Schließen des Ventils 90 im Falle eines Ausfalls der elektrischen Stromversorgung des Ventils 90.

Die Verstelleinrichtung aus Rohrkolben 93 mit Außenverzahnung 98 und der Innenverzahnung 99 des Rotors 101 ist kostengünstig herstellbar.

Gemäß einer Modifikation des zweiten Ausführungsbeispiels ist die Steuereinrichtung 105 nicht in das Ventil 90 integriert. Die Steuereinrichtung 105 ist in diesem Fall dezentral, insbesondere in unmittelbarer Nähe zum Ventil 90, angeordnet. Alternativ oder zusätzlich kann die Steuereinrichtung 105 eine Steuereinrichtung sein, die an einer zentralen Stelle der Behälterbehandlungsanlage 1 angeordnet ist. Die Steuereinrichtung 105 kann über ein Bussystem mit anderen Steuereinrichtungen oder elektrischen Elementen der Behälterbehandlungsanlage 1 verbunden sein, um beispielsweise Daten auszutauschen.

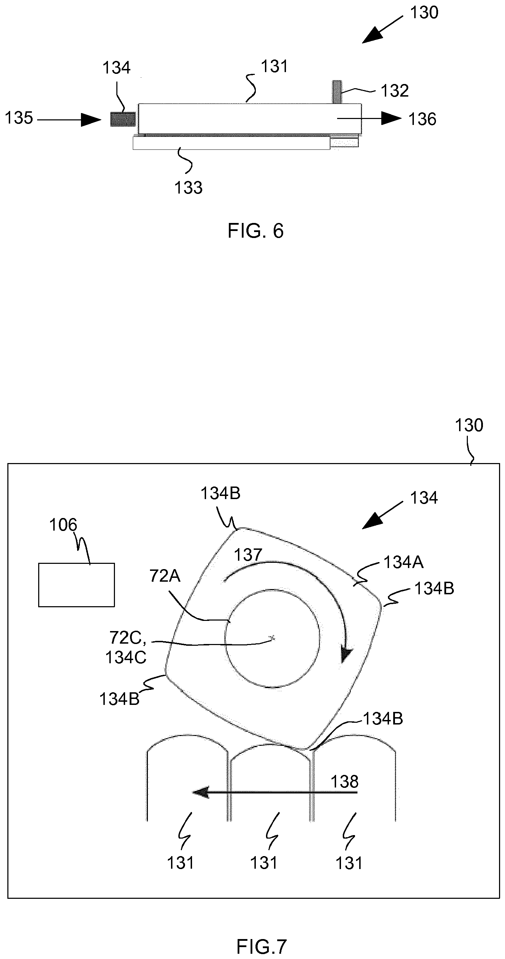

Fig. 6 zeigt eine Ausleiteinrichtung 130 gemäß einem dritten Ausführungsbeispiel. Die Ausleiteinrichtung 130 kann beispielsweise ein Pusher 31, 32, ein Ausleitelement 41 sein, bei einer Klammer 21, 22, 23 des Transportsterns angewendet werden, usw.

Bei der Ausleiteinrichtung 130 in Fig. 6 ist ein Stachel 131 zwischen einem Führungslager 132 und einer Führung 133 linear geführt. Durch einen mechanischen Auslöser 134, der in Richtung des Pfeils 135 auf den Stachel 131 trifft, kann der Stachel 131 in Richtung des Pfeils 136 bewegt werden.

Fig. 7 zeigt den mechanischen Auslöser 134 gemäß dem vorliegenden Ausführungsbeispiel genauer. Demzufolge hat der mechanische Auslöser oder die Mechanik 134 eine Nockenscheibe 134A, die vier Nocken 134B aufweist und in Richtung des Drehpfeils 137 um ihre Achse 134C drehbar ist. Dies wird mit dem Rotor 72A des Aktuator 72 erzielt, der mit der Nockenscheibe 134A entsprechend gekoppelt ist, so dass die Achse 134C der Achse 72C des Rotors 72A des Aktuators 72 entspricht. Zudem ist die Nockenscheibe 134A beabstandet zu einer Reihe aus Stacheln 131 angeordnet. Hierbei sind die Stacheln 131 von Fig. 6 entlang ihrer Länge nebeneinander angeordnet. Zudem können die Stacheln 131 entlang des Pfeils 138 relativ zu der Nockenscheibe 134A und damit dem Aktuator 72 bewegt werden.

In Fig. 7 ist zudem eine Steuereinrichtung 106 gezeigt, welche zur Steuerung des Aktuators 72 dient, dessen Aufbau und Funktionen in Bezug auf das erste Ausführungsbeispiel näher beschrieben sind. Die Steuereinrichtung 106 bestromt den Aktuator 72 derart mit elektrischem Strom dass sein Rotor 72A ausgehend von einem Arbeitspunkt beschleunigt. Bei Annäherung zu einem anderen Arbeitspunkt in Richtung des Drehpfeils 137 schaltet die Steuereinrichtung 106 den Aktuator 72 stromlos, so dass der Rotor 72A bedingt durch seine Massenträgheit oder die Massenträgheit der angebauten Nockenscheibe 134A als Last den anderen Arbeitspunkt überstreicht. Danach kann die Steuereinrichtung 106 den Aktuator 72 wieder mit einer Spannungsumkehr in der gleichen Richtung wie vorher betreiben. Auf diese Weise wird ein diskreter Rundlauf des Aktuators 72 um seine Achse 72C bewirkt, welche bei diesem Ausführungsbeispiel gleich der Achse 134C ist. Idealerweise wird der Rotor 72A in eine 45°-Position zum Statorpol gebracht, aus der heraus der Aktuator 72 gestartet wird. In diesem Arbeitspunkt hat der Aktuator 72 sofort sein höchstes Drehmoment und beschleunigt damit am schnellsten. Nach Überstreichen des Totpunktes bei 90° wird der Aktuator 72 dann bei 135° wieder gefangen.

Daher ist die mit dem Aktuator 72 antreibbare Nockenscheibe 134A derart relativ zu der Reihe aus Ausleiteinrichtungen angeordnet, dass eine Drehung der Nockenscheibe 134A um ihre eigene Achse aufgrund einer Aktivierung durch den Aktuator 72 bewirkt, dass nacheinander je ein Nocken 134B der Nockenscheibe 134A einen der Stacheln 131 berührt und dadurch in eine lineare Bewegung versetzt, um die Stacheln 131 von ihrer ersten Stellung in ihre zweite Stellung zu bewegen. Somit ist bei der Ausleiteinrichtung 130 ein elektro-mechanischer Antrieb für den Stachel 131 realisiert. Hierbei können hohe Taktfrequenzen erzielt werden

Die Stacheln 131 sind an ihrem der Nockenscheibe 134A zugewandten Ende abgerundet ausgeführt, wie in Fig. 7 gezeigt. Dadurch kann der Beschleunigungsweg zum Ausleiten des auszuleitenden Gegenstands, wie beispielsweise einem Behälter 3, erhöht werden, wenn ein Nocken 134B der Nockenscheibe 134A auf ein Ende von einem der Stacheln 131 trifft.

Somit kann auch ein Stachel 131 der Ausleiteinrichtung 130 gemäß dem vorliegenden Ausführungsbeispiel durch eine Drehung des Rotors 72A des Aktuators 72 zwischen einer ersten und einer zweiten Stellung verstellt werden. In Fig. 7 befinden sich die beiden äußeren Stacheln 131 in der ersten Stellung, in welcher kein Behälter 3 ausgeleitet wird. Der mittlere Stachel 131 befindet sich in der zweiten Stellung, in welcher ein Behälter 3 ausgeleitet wird. Bei der Ausleiteinrichtung 130 wird die Drehbewegung des Rotors 72A um einen Drehwinkel α von ca. 90° aufgrund der mit dem Rotor 72A gekoppelten Nockenscheibe 134A als Mechanik 134 in eine lineare Bewegung eines Stachels 131 als zu verstellendes Element der Ausleiteinrichtung 130 transformiert. Bei einer Drehbewegung des Rotors 72A um einen Drehwinkel α von 360° werden bei dem vorliegenden Ausführungsbeispiel nacheinander vier Stacheln 131 in eine translatorische Bewegung versetzt.

Gemäß einem vierten Ausführungsbeispiel kann in beispielsweise der ersten Abfülleinrichtung 50 das Füllventil 52 als eine Blende-/Dosiereinrichtung ausgeführt sein, die zur Einspritzung oder zum kontinuierlichen Füllen von Stickstoff als Medium 5 in gefüllte Getränkebehälter, wie den Behälter 3, vor dem Verschließen Verwendung findet. Hierbei kann eine Dosierung von Flüssigstickstoff mittels der Blende-/Dosiereinrichtung erfolgen, die von dem Aktuator 72 gesteuert wird. Zur Wärmeisolierung des Aktuators 72 kann die Blende-/Dosiereinrichtung aus keramischem Material bestehen. Insbesondere ist eine Sterilisation der Blende-/Dosiereinrichtung vorgesehen. Die Blende-/Dosiereinrichtung kann beispielsweise entsprechend dem vorher ermittelten Kopfraumvolumen- jeweils individuell kürzer oder länger geöffnet werden. Das Kopfraumvolumen in dem Getränkebehälter könnte über Kontrollsysteme, wie beispielsweise eine Kamera, usw., vor dem Verschließen des Getränkebehälters bestimmt werden, um die Dosierung mit Stickstoff individuell für jeden Behälter anzupassen.

Damit ist gemäß dem vorliegenden Ausführungsbeispiel eine Einspritzung auch für Behälterbehandlungsanlagen mit einer Leistung von mehr als 30.000 Behältern pro Stunde vorteilhaft möglich, bei welchen Behälterbehandlungsanlagen bisher ein hoher Verbrauch von Flüssigstickstoff mit entsprechend hohen Kosten, besonders bei Leistungen über 30.000/h mit kontinuierlicher Dosierung gegeben war.

Gemäß dem vorliegenden Ausführungsbeispiel ist eine genaue Dosierung des Flüssigstickstoffs auch bei hohen Leistungen, wie beispielsweise einem Durchsatz von mehr als 30.000 Behältern pro Stunde, realisierbar, wodurch eine Verringerung des Verbrauchs von Flüssigstickstoff und somit eine Reduzierung der Kosten folgt. Außerdem ist eine Berücksichtigung der Füllhöhe bzw. des Kopfraumvolumens im Behälter möglich, wodurch keine unterschiedlichen Innendrücke der verschlossenen Behälter mehr vorhanden sind.

Alle zuvor beschriebenen Ausgestaltungen der Behälterbehandlungsanlage 1, der Ventile 70, 90 der Ausleiteinrichtung 130 und der Blende-/Dosiereinrichtung können einzeln oder in allen möglichen Kombinationen Verwendung finden. Insbesondere können alle Merkmale der zuvor beschriebenen Ausführungsbeispiele beliebig miteinander kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Behälterbehandlungsanlage 1 kann auch andere Einrichtungen umfassen als sie in Bezug auf Fig. 1 genannt sind. Insbesondere kann die Behälterbehandlungsanlage 1 eine Streckblasmaschine 10 mit vorgeschalteter Heizeinrichtung und/oder eine Transporteinrichtung 20 und/oder eine Etikettiereinrichtung 60 und/oder eine Inspektionseinrichtung 30 und/oder eine Abfülleinrichtung 50, 55 und/oder eine Reinigungseinrichtung und/oder eine Verpackungseinrichtung usw. oder mehrere davon in der jeweils erforderlichen Reihenfolge umfassen.

Ist das Ventil 90 ein Druckluftventil einer Streckblasmaschine der Behälterbehandlungsanlage 1, kann ein Datenaustausch zwischen einer Reckwegsteuerung einer Reckstange und einer Steuereinrichtung des Ventils 70, 90 erfolgen.

Das Prinzip der Verstellung der beiden Ventile 70, 90 kann auch auf eine Ausleiteinrichtung angewendet werden. Zudem kann auch das Prinzip der Verstellung der Stacheln 131 der Ausleiteinrichtung 130 bei einem Ventil angewendet werden.

Vor der Inbetriebnahme der Ventile 70, 90 kann eine Referenzfahrt durchgeführt werden, um zumindest einen Endanschlag des Ventils 70, 90 zu kalibrieren. Hierbei und/oder beim Betrieb der Behälterbehandlungsanlage 1 kann ein Kraft/Wegverlauf aufgezeichnet und/oder visualisiert und/oder analysiert werden.

Der Aktuator 72 kann als Synchronmotor oder Schrittmotor ausgeführt sein. Zusätzlich oder alternativ kann der Aktuator 100 als Synchronmotor oder Schrittmotor ausgeführt sein. Hierbei kann für das Anfahren einer oder mehrerer Stellungen mit dem Aktuator 72 und/oder dem Aktuator 100 ein Absolutwertgeber zum Einsatz kommen.

Bei dem zweiten Ausführungsbeispiel können die Werkstoffe des Rohrkolbens 93 und der Führung 94 folgendermaßen gepaart werden. Ist der Rohrkolben 93 aus Metall gefertigt, ist die Führung 94 aus Kunststoff gefertigt. Ist hingegen der Rohrkolben 93 aus Kunststoff gefertigt, ist die Führung 94 aus Metall gefertigt.

Bei dem zweiten Ausführungsbeispiel können die Werkstoffe des Getriebes aus der Außenverzahnung 98 des Rohrkolbens 93 und der Innenverzahnung 99 des Rotors 101 so ausgelegt werden, dass das Getriebe ohne Schmierstoffe oder nur mit einer Initialschmierung funktioniert. Ist die Innenverzahnung 99 des Rotors 101 als drehendes Element aus Kunststoff gefertigt, ist die Außenverzahnung 98 des Rohrkolbens 93 als linear bewegtes Element aus Metall gefertigt. Ist hingegen die Innenverzahnung 99 des Rotors 101 als drehendes Element aus Metall gefertigt, ist die Außenverzahnung 98 des Rohrkolbens 93 als linear bewegtes Element aus Kunststoff gefertigt.

Außerdem kann bei dem zweiten Ausführungsbeispiel die Dichtung 96 oder deren Dichtfläche aus einem weicheren oder härteren Werkstoff als der Werkstoff des Rohrkolbens 93 gefertigt sein. Um eine bessere Dichtheit des Ventils 90 zu erreichen, ist eine weichere Abdichtung mittels der Dichtung 96 zu verwenden.

Das Gehäuse 91 mit Deckel 92 des Ventils 90 ist vorzugsweise gegen Staub und Flüssigkeit abgedichtet. Insbesondere erfüllt das Gehäuse 91 mit Deckel 92 zumindest in Bezug auf die elektrischen Teile des Aktuators 72 die Anforderungen von IP 65 gemäß der europäischen Norm EN 60529. Das Gehäuse 90 und/oder der Deckel kann/können beispielsweise Gussteil(e) sein.

Bei der Ausleiteinrichtung 130 kann die Nockenscheibe 134A auch mehr oder weniger als vier Nocken 134B aufweisen. Die Anzahl der Nocken 134B der Nockenscheibe 134A richtet sich insbesondere nach der Schnelligkeit der geforderten Bewegung, der Breite und/oder Form und/oder Material der Stacheln, usw. Zudem ist es vorteilhaft, wenn die Anzahl der Nocken 134B der Nockenscheibe 134A gleich der Anzahl der Pole des Aktuators 72 ist, da dann jeder Nocken 134B einem Polpaar zugeordnet ist und somit mit einem der Nocken 134B gezielt einer der Stacheln 131 translatorisch verstellt werden kann.

### Bezugszeichenliste

- 1: Behälterbehandlungsanlage
- 3: Behälter
- 3A: Hals
- 3B: Neckring
- 4: Etikett
- 5: Medium
- 10: Streckblasmaschine
- 11, 12: Blasventile
- 20: Transportstern
- 21,22,23: Klammern
- 30: Inspektionseinrichtung
- 31,32,33: Pusher
- 40: Ausleitweiche
- 41: Ausleitelement
- 50: erste Abfülleinrichtung
- 51, 52: Füllventile
- 55: zweite Abfülleinrichtung
- 56, 57: Füllventile
- 60: Etikettiereinrichtung
- 61: erster Etikettenwagen
- 62: zweiter Etikettenwagen
- 70: Ventil
- 71: Verstelleinrichtung
- 72: Aktuator
- 72A: Rotor
- 72B: Stator
- 72C: Achse
- 73: auslenkbare Stange
- 74: Kopplungselement
- 75: Gelenk
- 76: Führungsstange
- 77, 78: Führungen
- 81: erste Stellung
- 82: zweite Stellung
- 83: Feststellbremse
- 90: Ventil
- 91: Gehäuse
- 92: Deckel
- 92A: Anschlag
- 92B: Befestigungselement
- 93: Rohrkolben
- 94: lineare Führung
- 95: Dichtung
- 96: Dichtung
- 97: O-Ring
- 98: Außenverzahnung
- 99: Innenverzahnung
- 100: Aktuator
- 101: Rotor
- 102: Stator
- 103: Aktuatoranschluss
- 105, 106: Steuereinrichtungen
- 110: Steuerblock
- 120: Strömumgspfeil
- 130: Ausleiteinrichtung
- 131: Stachel
- 132: Führungslager
- 133: Führung
- 134: mechanischer Auslöser / Mechanik
- 134A: Nockenscheibe
- 134B: Nocken
- 134C: Achse der Nockenscheibe
- 135,136,137,138: Pfeile
- α: Drehwinkel

## Patentansprüche

1. Behälterbehandlungsanlage (1), mit
mindestens einem Element (76; 93; 131) zum Behandeln von Behältern, wobei das Element (76; 93; 131) Teil eines Ventils (70; 90) oder einer Ausleiteinrichtung (130) ist, und
einer Verstelleinrichtung (71, 72; 93, 98, 99, 100; 72, 134) zum Verstellen des Elements (76; 93; 131) zwischen einer ersten und einer zweiten Stellung (81, 82),
wobei die Verstelleinrichtung (71, 72; 93, 98, 99, 100; 72, 134) einen mit Magnetismus arbeitenden Aktuator (72; 100) derart aufweist, dass eine durch den Aktuator (72; 100) hervorgerufene Drehbewegung das Element (76; 93; 131) unter Vermittlung einer Mechanik (73 bis 78; 93, 98, 99; 134), die ausgestaltet ist, das Element (76; 93; 131) in eine lineare Bewegung zu versetzen, zwischen seiner ersten und seiner zweiten Stellung (81, 82) verstellt und/oder dass der Aktuator (72; 100) an beliebige Stellen zwischen der ersten und zweiten Stellung (81, 82) gefahren und dort gehalten werden kann, so dass mit der Verstelleinrichtung (71, 72; 93, 98, 99, 100; 72, 134) je nach Bedarf Zwischenstellungen zwischen der ersten und zweiten Stellung (81, 82) anfahrbar sind.

2. Behälterbehandlungsanlage (1) nach Anspruch 1, wobei die Mechanik (73 bis 78; 93, 98, 99; 134) derart ausgestaltet ist, dass eine durch den Aktuator (72; 100) hervorgerufene Drehbewegung in eine lineare Bewegung zwischen der ersten und zweiten Stellung (81, 82) transformiert wird.

3. Behälterbehandlungsanlage (1) nach Anspruch 1 oder 2,
wobei das Ventil (70) eine auslenkbare Stange (73) aufweist, welche derart mit einem Rotor (72A) des Aktuators (72) und einer Führungsstange (76) gekoppelt ist, dass eine durch den Aktuator (72) hervorgerufene Drehbewegung in eine lineare Bewegung der Führungsstange (76) transformiert wird, oder
wobei das Ventil (90) einen Rohrkolben (93) mit einer Außenverzahnung (98) aufweist, welche derart mit einer Innenverzahnung (99) des Aktuators (72) gekoppelt ist, dass eine durch den Aktuator (72) hervorgerufene Drehbewegung in eine lineare Bewegung des Rohrkolbens (93) transformiert wird.

4. Behälterbehandlungsanlage nach Anspruch 3,
wobei die Außenverzahnung (98) als Gewindestange ausgeführt ist, und/oder
wobei die Außenverzahnung (98) und die Innenverzahnung (99) ein Getriebe bilden, das selbsthemmend ausgeführt ist und/oder dessen Spiel einstellbar ist.

5. Behälterbehandlungsanlage (1) nach Anspruch 3 oder 4,
wobei der Rohrkolben (93) ein druckausgeglichener Rohrkolben ist, und/oder
wobei der Rohrkolben (93) eine Verdrehsicherung gegen Drehung um die eigene Achse aufweist.

6. Behälterbehandlungsanlage (1) nach einem der Ansprüche 3 bis 5, wobei eine elektrische Steuereinrichtung (105) zum Steuern des Aktuators (100) in das Ventil (90) integriert ist.

7. Behälterbehandlungsanlage (1) nach einem der Ansprüche 3 bis 6,
wobei das Ventil (90) ein gegen Druck von bis zu ca. 40 bar abgedichtetes Gehäuse (91) mit Gehäusedeckel (92) aufweist, in welchem die Verstelleinrichtung (93, 98, 99, 100) montiert ist.

8. Behälterbehandlungsanlage (1) nach einem der vorangehenden Ansprüche,
wobei das Ventil (70, 90) ein Füllventil (51, 52, 56, 57) einer Abfülleinrichtung (50, 55) zum Abfüllen mindestens eines Mediums (5) in einen Behälter (3) ist, oder
wobei das Ventil (90) ein Blasventil (11, 12) einer Streckblasmaschine (10) ist.

9. Behälterbehandlungsanlage (1) nach einem der vorangehenden Ansprüche, wobei der Aktuator (72; 100) ein 4-poliger Gleichstromaktuator ist, der mit Magnetismus zwischen zwei Arbeitspunkten betreibbar ist.

10. Behälterbehandlungsanlage (1) nach Anspruch 1 oder 9,
wobei mehrere Ausleiteinrichtungen (130) in einer Reihe nebeneinander angeordnet sind, und
wobei eine von dem Aktuator (72) antreibbare Nockenscheibe (134A) derart relativ zu der Reihe aus Ausleiteinrichtungen (130) angeordnet ist, dass eine Drehung der Nockenscheibe (134A) um ihre eigene Achse aufgrund einer Drehung des Aktuator (72) bewirkt, dass nacheinander je ein Nocken (134B) der Nockenscheibe (134A) eine der Ausleiteinrichtungen (130) berührt und dadurch in eine lineare Bewegung versetzt, um die Ausleiteinrichtung (130) von der ersten Stellung in die zweite Stellung zu bewegen.

11. Behälterbehandlungsanlage (1) nach Anspruch 10, zudem mit einer Steuereinrichtung (106) zur Steuerung des Aktuators (72) derart, dass sein Rotor (72A) ausgehend von einem Arbeitspunkt beschleunigt und der Aktuator (72) bei Annäherung zu einem anderen Arbeitspunkt stromlos geschaltet wird, so dass der Rotor (72A) bedingt durch seine Massenträgheit oder die Massenträgheit einer angebauten Last den anderen Arbeitspunkt überstreicht und dann wieder mit einer Spannungsumkehr in der gleichen Richtung wie vorher betrieben werden kann, um einen diskreten Rundlauf des Aktuators (72) um seine Achse (72C) zu bewirken.

12. Behälterbehandlungsanlage (1) nach Anspruch 10 oder 11,
wobei das Element (76; 93; 131) Teil eines Transportsterns (20) zum Transportieren von Behältern (3) und/oder ein Pusher (31, 32, 33) und/oder Teil eines Treibstockaggregats und/oder Teil eines Etikettenwagens (61, 62) und/oder Teil einer Ausleitweiche (40) ist.

13. Verfahren zum Verstellen eines Ventils (70; 90) oder einer Ausleiteinrichtung (130) einer Behälterbehandlungsanlage (1), welche mindestens ein Element (76; 93; 131) zum Behandeln von Behältern (3) aufweist, wobei das Element (76; 93; 131) Teil des Ventils (70; 90) oder der Ausleiteinrichtung (130) ist, mit dem Schritt
Verstellen, mit einer Verstelleinrichtung (71, 72; 93, 98, 99, 100; 72, 134), des Elements (76; 93; 131) zwischen einer ersten und einer zweiten Stellung (81, 82),
wobei die Verstelleinrichtung (71, 72; 93, 98, 99, 100; 72, 134) einen mit Magnetismus arbeitenden Aktuator (72; 100) derart aufweist, dass eine durch den Aktuator (72; 100) hervorgerufene Drehbewegung das Element (76; 93; 131) unter Vermittlung einer Mechanik (73 bis 78; 93, 98, 99; 134), die das Element (76; 93; 131) in eine lineare Bewegung versetzt, zwischen seiner ersten und seiner zweiten Stellung (81, 82) verstellt und/oder dass der Aktuator (72; 100) an beliebige Stellen zwischen der ersten und zweiten Stellung (81, 82) gefahren und dort gehalten wird, so dass mit der Verstelleinrichtung (71, 72; 93, 98, 99, 100; 72, 134) je nach Bedarf Zwischenstellungen zwischen der ersten und zweiten Stellung (81, 82) angefahren werden.

## Claims

1. A container treatment plant (1) comprising
at least one element (76; 93; 131) for treating containers, wherein the element (76; 93; 131) is part of a valve (70; 90) or a diverting unit (130), and
a displacing unit (71, 72; 93, 98, 99, 100; 72, 134) for displacing the element (76; 93; 131) between a first position (81) and a second position (82),
wherein the displacing unit (71, 72; 93, 98, 99, 100; 72, 134) comprises a magnetically operating actuator (72; 100) such that a rotary motion caused by the actuator (72; 100) displaces the element (76; 93; 131) with the aid of a mechanism (73 to 78; 93, 98, 99; 134), which is configured to displace the element (76; 93; 131) into a linear motion, between its first and second positions (81, 82) and/or that the actuator (72; 100) is drivable to arbitrary positions between the first and second positions (81, 82) and can be held there, so that intermediate positions between the first and second positions (81, 82) are reachable according to requirements.

2. The container treatment plant (1) according to claim 1, wherein the mechanism (73 to 78; 93, 98, 99; 134) is configured such that a rotary motion caused by the actuator (72; 100) is transformed into a linear motion between the first and second positions (81, 82).

3. The container treatment plant (1) according to claim 1 or 2,
wherein the valve (70) comprises a deflectable rod (73) which is coupled in such a way with a rotor (72A) of the actuator (72) and a guiding rod (76) that a rotary motion caused by the actuator (72) is transformed into a linear motion of the guiding rod (76), or
wherein the valve (90) has a tubular piston (93) comprising an external indentation (98) which is coupled with an inner indentation (99) of the actuator (72) such that a rotary motion caused by the actuator (72) is transformed into a linear motion of the tubular piston (93).

4. The container treatment plant (1) according to claim 3,
wherein the outer indentation (98) is implemented as a threaded rod, and/or wherein the outer indentation (98) and the inner indentation (99) form a transmission that is implemented self-locking and/or the play thereof is adjustable.

5. The container treatment plant (1) according to claim 3 or 4,
wherein the tubular piston (93) is a tubular piston which is equilibrated as regards pressure and/or
wherein the tubular piston (93) comprises a rotation protection against rotating around its own axis.

6. The container treatment plant (1) according to any one of the claims 3 to 5, wherein an electric control unit (105) for controlling the actuator (100) is integrated into the valve (90).

7. The container treatment plant (1) according to any one of the claims 3 to 6,
wherein the valve (90) comprises a housing (91) which comprises a housing cover (92) and which is sealed against a pressure of up to approximately 40 bar and in which the displacing unit (93, 98, 99, 100) is mounted.

8. The container treatment plant (1) according to any one of the preceding claims,
wherein the valve (70, 90) is a filling valve (51, 52, 56, 57) of a filling unit (50, 55) for filling at least one medium (5) in a container (3), or
wherein the valve (90) is a blowing valve (11, 12) of a stretch blow molding machine (10).

9. The container treatment plant (1) according to any one of the preceding claims, wherein the actuator (72; 100) is a 4-pole direct current actuator which is operable with magnetism between two positions.

10. The container treatment plant (1) according to claim 1 or 9,
wherein a plurality of diverting units (130) are arranged in one row side by side to each other, and
wherein a cam disc (134A) drivable by the actuator (72) is positioned in such a way relative to the row of diverting units (130) that a rotation of the cam disc (134A) around its own axis causes because of a rotation of the actuator (72) that every cam (134B) of the cam disc (134A) one after the other touches one of the diverting units (130) and transfers it therewith into a linear motion, to move the diverting unit (130) from the first position into the second position.

11. The container treatment plant (1) according to claim 10, further comprising a control unit (106) for controlling the actuator (72) such that its rotor (72A) accelerates starting from a working point and that the actuator is switched to a currentless state when approaching another working point, so that the rotor (72A) sweeps through the another working point due to the mass inertia of the rotor or the mass inertia of a mounted load and then the rotor can be operated again by a voltage reversal in the same direction as before to achieve a discrete true running of the actuator (72) around its axis (72C).

12. The container treatment plant (1) according to claim 10 or 11,
wherein the element (76; 93; 131) is part of a transport star (20) for transporting containers (3) and/or a pusher (31, 32, 33) and/or is part of a goad aggregate and/or part of a labeling carrier (61, 62) and/or part of a diverting turnout (40).

13. A method for displacing an element (76; 93; 131) of a valve (70; 90) or a diverting unit (130) of a container treatment plant (1) which comprises at least one element (76; 93; 131) for treating containers (3), wherein the element (76; 93; 131) is part of the valve (70; 90) or the diverting unit (130), wherein the method comprises the step of
displacing, by a displacing unit (71, 72; 93, 98, 99, 100; 72, 134), the element (76; 93; 131) between a first position (81) and a second position (82),
wherein the displacing unit (71, 72; 93, 98, 99, 100; 72, 134) comprises a magnetically operating actuator (72; 100) such that a rotary motion caused by the actuator (72; 100) displaces the element (76; 93; 131) with the aid of a mechanism (79 to 78; 93, 98, 99, 134), which displaces the element (76; 93; 131) into a linear motion, between its first and second positions (81, 82) and/or that the actuator (72; 100) is driven to arbitrary positions between the first and second positions (81, 82) and is held there, so that intermediate positions between the first and second positions (81, 82) are reached according to requirements.

## Revendications

1. Installation de traitement de récipients (1) comprenant:
au moins un élément (76 ; 93 ; 131) pour traiter des récipients, dans laquelle l'élément (76 ; 93 ; 131) fait partie d'un clapet (70 ; 90) ou d'une unité de dérivation (130), et
une unité de déplacement (71, 72 ; 93, 98, 99, 100 ; 72, 134) pour déplacer l'élément (76 ; 93 ; 131) entre une première position (81) et une seconde position (82),
dans laquelle l'unité de déplacement (71, 72 ; 93, 98, 99, 100 ; 72, 134) comprend un actionneur à actionnement magnétique (72 ; 100) de sorte qu'un mouvement rotatif provoqué par l'actionneur (72 ; 100) déplace l'élément (76 ; 93 ; 131) à l'aide d'un mécanisme (73 à 78 ; 93, 98, 99 ; 134) qui est configuré pour déplacer l'élément (76 ; 93 ; 131) en un mouvement linéaire, entre ses première et seconde positions (81, 82) et/ou en ce que l'actionneur (72 ; 100) peut être entraîné dans des positions arbitraires entre les première et seconde positions (81, 82) et peut être maintenu dans ces dernières, de sorte que des positions intermédiaires entre les première et seconde positions (81, 82) peuvent être atteintes selon les besoins.

2. Installation de traitement de récipients (1) selon la revendication 1, dans laquelle le mécanisme (73 à 78 ; 93, 98, 99 ; 134) est configuré de sorte qu'un mouvement rotatif provoqué par l'actionneur (72 ; 100) est transformé en un mouvement linéaire entre les première et seconde positions (81, 82).

3. Installation de traitement de récipients (1) selon la revendication 1 ou 2,
dans laquelle le clapet (70) comprend une tige déviable (73) qui est couplée avec un rotor (72A) de l'actionneur (72) et une tige de guidage (76) de sorte qu'un mouvement rotatif provoqué par l'actionneur (72) est transformé en un mouvement linéaire de la tige de guidage (76), ou bien
dans laquelle le clapet (90) a un piston tubulaire (93) comprenant une indentation externe (98) qui est couplée avec une indentation interne (99) de l'actionneur (72) de sorte qu'un mouvement rotatif provoqué par l'actionneur (72) est transformé en un mouvement linéaire du piston tubulaire (93).

4. Installation de traitement de récipients (1) selon la revendication 3,
dans laquelle l'indentation externe (98) est mise en oeuvre sous la forme d'une tige filetée, et/ou
dans laquelle l'indentation externe (98) et l'indentation interne (99) forment une transmission qui est mise en oeuvre par auto-blocage et/ou son jeu est ajustable.

5. Installation de traitement de récipients (1) selon la revendication 3 ou 4,
dans laquelle le piston tubulaire (93) est un piston tubulaire qui est équilibré par rapport à la pression, et/ou
dans laquelle le piston tubulaire (93) comprend une protection de rotation contre le fait de tourner autour de son propre axe.

6. Installation de traitement de récipients (1) selon l'une quelconque des revendications 3 à 5, dans laquelle l'unité de commande électrique (105) pour commander l'actionneur (100) est intégrée dans le clapet (90).

7. Installation de traitement de récipients (1) selon l'une quelconque des revendications 3 à 6,
dans laquelle le clapet (90) comprend un boîtier (91) qui comprend un couvercle de boîtier (92) et qui est scellé contre une pression allant jusqu'à approximativement 40 bar et dans lequel l'unité de déplacement (93, 98, 99, 100) est montée.

8. Installation de traitement de récipients (1) selon l'une quelconque des revendications précédentes,
dans laquelle le clapet (70, 90) est un clapet de remplissage (51, 52, 56, 57) d'une unité de remplissage (50, 55) pour verser au moins un milieu (5) dans le récipient (3), ou bien
dans laquelle le clapet (90) est un clapet de soufflage (11, 12) d'une machine de moulage par étirage - soufflage (10).

9. Installation de traitement de récipients (1) selon l'une quelconque des revendications précédentes,
dans laquelle l'actionneur (72 ; 100) est un actionneur à courant continu à 4 pôles qui peut être actionné par magnétisme entre deux positions.

10. Installation de traitement de récipients (1) selon la revendications 1 ou 9,
dans laquelle une pluralité d'unités de dérivation (130) sont agencées sur une rangée, côte à côte, et
dans laquelle un disque de came (134A) pouvant être entraîné par l'actionneur (72) est positionné par rapport à la rangée d'unités de dérivation (130) afin de provoquer une rotation du disque de came (134A) autour de son propre axe en raison d'une rotation de l'actionneur (72) de sorte que chaque came (134B) du disque de came (134A), les unes après les autres, touche l'une des unités de dérivation (130) et la transfère avec cette dernière en un mouvement linéaire, afin de déplacer l'unité de dérivation (130) de la première position à la seconde position.

11. Installation de traitement de récipients (1) selon la revendication 10, comprenant en outre une unité de commande (106) pour commander l'actionneur (72) de sorte que son rotor (72A) accélère le démarrage à partir d'un point de travail et en ce que l'actionneur est commuté dans un état sans courant lorsqu'il s'approche d'un autre point de travail, de sorte que le rotor (72A) balaie l'autre point de travail en raison de l'inertie de masse du rotor ou l'inertie de masse d'une charge montée et ensuite le rotor peut être à nouveau actionné par l'inversion de tension dans la même direction que précédemment afin d'obtenir une vraie course discrète de l'actionneur (72) autour de son axe (72C).

12. Installation de traitement de récipients (1) selon la revendication 10 ou 11,
dans laquelle l'élément (76 ; 93 ; 131) fait partie d'une étoile de transport (20) pour transporter des récipients (3) et/ou un poussoir (31, 32, 33) et/ou fait partie d'un agrégat d'aiguillon et/ou une partie d'un support d'étiquetage (61, 62) et/ou partie d'une assistance de dérivation (40).

13. Procédé pour déplacer un élément (76 ; 93 ; 131) d'un clapet (70 ; 90) ou d'une unité de dérivation (130) d'une installation de traitement de récipients (1) qui comprend au moins un élément (76 ; 93 ; 131) pour traiter des récipients (3), dans lequel l'élément (76 ; 93 ; 131) fait partie du clapet (70 ; 90) ou de l'unité de dérivation (130), dans lequel le procédé comprend l'étape suivante:
déplacer, par une unité de déplacement (71, 72 ; 93, 98, 99, 100 ; 72, 134), l'élément (76 ; 93 ; 131) entre une première position (81) et une seconde position (82),
dans lequel l'unité de déplacement (71, 72 ; 93, 98, 99, 100 ; 72, 134) comprend un actionneur à actionnement magnétique (72 ; 100) de sorte qu'un mouvement rotatif provoqué par l'actionneur (72 ; 100) déplace l'élément (76 ; 93 ; 131) à l'aide d'un mécanisme (79 à 78 ; 93, 98, 99, 134) qui déplace l'élément (76 ; 93 ; 131) en un mouvement linéaire, entre ses première et seconde positions (81, 82) et/ou de sorte que l'actionneur (72 ; 100) est entraîné dans des positions arbitraires entre les première et seconde positions (81, 82) et est maintenu dans ces dernières, de sorte que les positions intermédiaires entre les première et seconde positions (81, 82) sont atteintes selon les besoins.
